# EUROPÄISCHE PATENTSCHRIFT

(11) **EP 2 105 845 B1**
(45) Veröffentlichungstag und Bekanntmachung des Hinweises auf die Patenterteilung: **02.05.2018**
(21) Anmeldenummer: 08005952.0
(22) Anmeldetag: 28.03.2008
(51) Int. Cl.: G06F 17/30

(54) **Identifikationsverfahren**
Identification method
Procédé d'identification

(43) Veröffentlichungstag der Anmeldung: 30.09.2009
(73) Patentinhaber: Neoperl GmbH, 79379 Müllheim (DE)
(72) Erfinder: Denzler, Oliver, 4103 Bottmingen (CH); Weis, Christoph, 79379 Müllheim (DE)
(74) Vertreter: Kunst, Manuel Nikolaus Johannes

(56) Entgegenhaltungen:
- EP-A- 1 650 678
- EP-A- 1 737 198
- DE-A1- 10 245 900
- US-A- 3 795 345
- US-A1- 2002 102 966
- US-A1- 2004 208 372
- KLAUS EHRENFRIED ET AL: "Processing calibration-grid images using the Hough transformation; Processing calibration-grid images", MEASUREMENT SCIENCE AND TECHNOLOGY, IOP, BRISTOL, GB, vol. 13, no. 7, 1 July 2002 (2002-07-01), pages 975-983, XP020063542, ISSN: 0957-0233, DOI: 10.1088/0957-0233/13/7/303
- LUO H ET AL: "Camera calibration with coplanar calibration board near parallel to the imaging plane", SENSORS AND ACTUATORS A: PHYSICAL, ELSEVIER BV, NL, vol. 132, no. 2, 20 November 2006 (2006-11-20), pages 480-486, XP027935735, ISSN: 0924-4247 [retrieved on 2006-11-20]
- Mactographer: "Forensic Photography", Wikipedia , 1 March 2008 (2008-03-01), Retrieved from the Internet: URL:https://en.wikipedia.org/w/index.php?t itle=Forensic_photography&oldid=195055566 [retrieved on 2017-03-21]
- Damien Yarrick: "Category: Images with coins to indicate scale", Wikipedia , 9 March 2008 (2008-03-09), Retrieved from the Internet: URL:https://commons.wikimedia.org/w/index. php?title=Category:Images_with_coins_to_in dicate_scale&oldid=10385892 [retrieved on 2017-03-21]
- S Zambaninin, M Kampel: "Segmentation of Ancient Coins Based on Local entropy and Gray Value Range", TU Wien, Austria , vol. Computer Vision Winter Workshop 2008 6 February 2008 (2008-02-06), Retrieved from the Internet: URL:http://www.caa.tuwien.ac.at/cvl/wp-con tent/uploads/2014/12/cvww08.pdf [retrieved on 2017-03-21]

## Beschreibung

Die Erfindung betrifft eine Vorrichtung zur Identifizierung eines Gegenstandes.

Für den Kunden eines Herstellers oder Zwischenhändlers mit vielfältigem Produktangebot ist es oft schwierig, insbesondere bei der Auswahl von Ersatzteilen das angebotene Sortiment zu überblicken und das passende Ersatzteil zu erkennen. Diese Schwierigkeit ergibt sich besonders, wenn sich die angebotenen Teile hauptsächlich hinsichtlich technischer Merkmale unterscheiden, mit denen der Knaufinteressent selbst als interessierter Laie nur geringfugig vertraut ist. Oftmals möchte der Kaufinteressent nicht die nötige Mühe aufwenden, die technisch notwendigen Feinheiten zu durchdringen oder ist bei der Kaufentscheidung einer Reizüberflutung ausgesetzt, durch die er sich überfordert fühlt. Der Kaufinteressent wird in diesem Fall mit großer Wahrscheinlichkeit das nächstbeste Ersatzteil auswählen und bei der Rückkehr vom Einkauf oder später beim Einsatz des Ersatzteils frustriert feststellen, dass die instandgesetzte Sache nun nicht mehr voll funktionsfähig ist. Leicht wird er dem Hersteller oder Zwischenhändler die Schuld für den Fehler geben.

Andererseits muss der Hersteller oder Zwischenhändler eines Produktes bemüht sein, eine möglichst große Variantenvielfalt zu jeder Produktreihe anzubieten, um die gehobenen Kundenwünsche hinsichtlich optimaler Leistung und maximaler Anpassung an regionale Besonderheiten und unter Berücksichtigung eines gesteigerten Bedürfnisses nach Individualisierung befriedigen zu können.

Aus EP 1 650 678 A1 und US 2006/0093333 A1 ist ein Verfahren zum Informationsaustausch zwischen einem mobilen Endgerät und einem Server bekannt, wobei ein Benutzer zusätzliche Angaben zu einem vom Endgerät an den Server übermittelten, ein zu identifizierendes Objekt zeigenden Bild eingibt.

Aus KLAUS EHRENFRIED ET AL.: "Processing calibration-grid images using the Hough transformation; Processing calibration-grid images", MEASUREMENT SCIENCE AND TECHNOLOGY, IOP, BRISTOL, GB, Bd. 13, Nr. 7, 1. Juli 2002 (2002-07-01); Seiten 975-983, XP020063542, ISSN: 0957-0233, DOI: 10.1088/0957-0233/13/7/303 und LUO H ET AL.; "Camera calibration with coplanar calibration board near parallel to the imaging plane", SENSORS AND ACTUATORS A: PHYSICAL, ELSEVIER BV, NL, Bd. 132, Nr. 2, 20. November 2006 (2006-11-20), Seiten 480-486, XP027935735, ISSN: 9024-4247 [gefunden am 2006-11-20], ist es bekannt, perspektivisch verzerrte Bilder anhand eines hinsichtlich Skalierung und Aufnahmewinkel robusten Kalibrierobjektes zu entzerren.

Aus US 2004/0208372 A1 sind ein Bildaufnahme- und Identifizierungssystem und ein korrespondierendes Verfahren bekannt, wobei ein digital aufgenommenes Bild in eine Gruppe von Charakterisierungsparametermengen zerlegt wird und die Charakterisierungsparamatermenge mit identischen Parametern bekannter Objekte aus einer Datenbank verglichen wird, um die besten Übereinstimmungen zur Identifizierung des Objekts zu ermitteln.

Aus dem Wikipedia Artikel Mactographer: "Forensic Phatography" (vom 01. März 2008), URL:https://en.wikipedia.org/w/index.php?title=Forensic_photo graphy&oldid=195055566, gefunden am 21.03.2017, ist bekannt, dass zur Größenbestimmung von aufgenommenen Objekten an einem Tatort Münzen verwendbar sind.

Aus US 3,795,345 ist ein Verkaufsautomat für Getränkedosen bekannt. Durch Betätigen eines Auswahlknopfes kann durch einen Kunden eine Getränkedose manuell ausgewählt und durch den Automaten aus einem Vorrat ausgegeben werden.

Der Erfindung liegt daher die Aufgabe zugrunde, die Auswahl des richtigen Ersatzteils aus einer Produktreihe mit einer Vielzahl von Varianten möglichst fehlerfrei zu ermöglichen.

Die Erfindung sieht zur Lösung dieser Aufgabe eine Vorrichtung zur Identifizierung von Gegenständen gemäß Anspruch 1 vor, insbesondere wobei die Vorrichtung zur Durchführung eines Verfahrens eingerichtet ist, wobei in einem ersten Verfahrensschritt wenigstens ein elektronisches Abbild des zu identifizierenden Gegenstandes an eine Auswerteeinheit übermittelt wird, dass das elektronische Abbild in der Auswerteeinheit auf Übereinstimmungen mit zumindest einem, in einer Datenbank hinterlegten elektronischen Abbild des zu identifizierenden Gegenstandes oder mindestens eines formidentischen oder formähnlichen Gegenstandes abgeglichen wird und dass die Auswerteeinheit anschließend die Daten ausgibt, die in der Datenbank zu dem zumindest einen, als ausreichend übereinstimmend erkannten Abbild hinterlegt waren. Das elektronische Abbild wird vorzugsweise mit einer Kamera oder einer allgemeinen optischen Aufnahmevorrichtung als Ablichtung des zu identifizierenden Gegenstands direkt oder aus einem vorhandenen Abbild des Gegenstandes durch Scannen erzeugt. Die Erfindung macht sich insbesondere die überraschende Erkenntnis zunutze, dass der Kunde, der ein Ersatzteil sucht, nicht anhand des reparaturbedürftigen Gesamtgegenstandes eine aufwendige Suche in umfangreichen Katalogen durchführt, sondern die in dem auszuwechselnden Teil, dem zu identifizierenden Gegenstand, also dem Ersatzteil, enthaltene vollständige, für ihn als Laie jedoch in der Regel nicht voll umfänglich wahrnehmbare Information über das benötigte Teil nutzt, indem er diese Information an eine Auswerteeinheit in Bildform übermittelt. Die Auswerteeinheit übernimmt hierbei aufgrund ihres höheren Fachwissens und/oder vorprogrammierter Routinen die Ableitung der relevanten Information aus der bildlichen Darstellung. Diese Auswerteeinheit kann einen eine oder mehrere Datenbanken bedienenden, erfahrenen Fachmann umfassen, der das Abbild erkennt und identifiziert oder, vorzugsweise anhand eines festen Ablaufplans, eine geeignete Suchabfrage einleitet. Das ermittelte Ergebnis wird dann an den Absender des elektronischen Abbilds zurückgesandt und dient zur Wegleitung beim Kauf. Somit sind Fehler bei der Kaufentscheidung des Interessenten nahezu ausgeschlossen.

Eine besonders schnelle Reaktion die Anfrage des Kunden, also die Übersendung eines Bildes, ergibt sich jedoch, wenn die Auswerteeinheit eine computerimplementierte, automatische Bilderkennung ausführt, aus deren Ergebnis beispielsweise durch in einer Datenbank hinterlegte Regeln eine Suchabfrage in einer oder mehrerer, auch über das Internet verbundenen Datenbanken konstruiert und veranlasst wird. Beispielsweise ist eine automatische Bilderkennung nach der DE 691 31 350 T2 durchführbar. Hierzu ist vorteilhaft ausnutzbar, dass das gesendete Abbild in elektronischer Form, also digitalisiert, vorliegt und einer computerimplementierten Weiterverarbeitung ohne weiteres zugänglich ist. Das recherchierte Ergebnis wird wiederum dem Kunden oder Kaufinteressenten zur Verfügung gestellt und reduziert Fehlkäufe erheblich.

Die Bilderkennung berücksichtigt vorzugsweise geometrische Ähnlichkeiten mit Merkmalen von in den Datenbanken hinterlegten Gruppen von Gegenständen. Beispielsweise ist zunächst eine Formerkennung des Umrisses oder eine Farberkennung durchführbar, und die Datenbanken erlauben eine Sortierung nach derartigen Kriterien.

Die zu dem erkannten Abbild hinterlegten Daten können die Bezeichnung, beispielsweise Typennummer oder Handelsname, ein Hersteller, die Beschaffenheit, die Herstellung, die technische Entstehungs- bzw. Herkunftsgeschichte, wenigstens eine mögliche Bezugsquelle, beispielsweise in einem Online-Shop unter Angabe des Direkt-Links, und/oder eine Preisspanne des Bezugspreises und/oder weitere Informationen des gesuchten Ersatzteils enthalten. Vorzugsweise beziehen sich die von der Auswerteeinheit ausgegebenen Daten jedoch auf den zu identifizierenden Gegenstand oder ein dem zu identifizierenden Gegenstand zugeordnetes Ersatzteil oder Bestandteil. Dem Käufer kann somit die Obergruppe, zu dem der von ihm abgebildete Gegenstand gehört, beispielsweise das Gerät, an dem der identifizierte Gegenstand normalerweise vorgesehen ist oder die Produktreihe, zu der er gehört, angezeigt werden. Es ist mit der Erfindung beispielsweise auch möglich, zu einem antiquarisch erworbenen Lampenfuß den original passenden Lampenschirm ausfindig zu machen oder zu einer vorhanden Wasserarmatur einen passenden Strahlregler oder allgemein zu einem vorhandenen Teil ein weiteres, aus ästhetischen, funktionalen oder historischen Gründen passendes Ergänzungs- oder Erweiterungsteil ausfindig zu machen.

Eine Ausgestaltung der Erfindung kann vorsehen, dass die zum Abgleich bestimmte Datenmenge und/oder die ausgegebenen Daten durch eine Vorauswahl auf eine Teilmenge der in der Datenbank hinterlegten Abbilder oder der zu dem hinterlegten Abbild zugehörigen Daten begrenzt wird/werden. Dies kann beispielsweise durch Zusatzinformationen erfolgen, die der Kunde seiner Bildanfrage beifügt, oder anhand von Informationen, die aus dem Absendeort oder dem Weg, den die Bildanfrage zur Auswerteeinheit genommen hat, abgeleitet werden. Beispielsweise kann die Auswerteeinheit so länderabhängige Besonderheiten, die für den Absender der Bildanfrage gelten, deren sich der Absender auch oft nicht bewusst ist, weil er sie für natürlich hält oder gar nicht wahrnimmt, betreffen.

Vorzugsweise wird in der Auswerteeinheit eine Vorauswahl aufgrund der in die Auswerteeinheit insbesondere suchspezifisch eingegebenen Daten, aufgrund der das Abbild des zu identifizierenden Gegenstandes übermittelnden Datenverarbeitungs- oder Datenübertragungsanlage, und/oder aufgrund von im übermittelten Abbild zusätzlich abgebildeten Referenzobjekten getroffen. Die Datenverarbeitungs- oder Datenübertragungsanlage bildet vorzugsweise ein Glied der Übertragungskette zwischen Absendeort und Auswerteeinheit. Die Verwendung eines Referenzobjektes ermöglicht die Kompensation von Besonderheiten, die sich aus der Aufnahmetechnik und/oder aus den optischen Eigenschaften der zur Erstellung des elektronischen Abbildes verwendeten Vorrichtung ergeben. Als Referenzobjekt ist vorzugsweise ein üblicherweise verfügbarer Gegenstand verwendbar, der nicht notwendig in Zusammenhang mit dem zu identifizierenden Gegenstand steht, beispielsweise eine Streichholzschachtel, ein Streichholz, ein handelsüblicher Gliedermaßstab, eine Münze, eine Kreditkarte oder Geldkarte, eine Briefmarke, oder ein von dem Hersteller oder Zwischenhändler bereitgestelltes Referenzobjekt, beispielsweise ein in besonderer Weise ausgestalteter Aufkleber oder eine Identifikationsmarke. Weitere Referenzobjekte sind vorteilhaft einsetzbar, wobei es besonders vorteilhaft ist, wenn die Referenzobjekte aufgrund eines von der Vergrößerung bei der Ablichtung und von perspektivischen Verzerrungen unabhängiges Merkmal identifizierbar sind. Die vom Hersteller oder Zwischenhändler bereitgestellten Referenzobjekte können zusätzliche Informationen über den Ort ihrer Bereitstellung und somit über die lokal geltenden Nebenbedingungen, die bei der Identifizierung des gesuchten Gegenstandes zu berücksichtigen sind, enthalten. Dem Kunden, also dem Anfragesteller, kann somit beispielsweise signalisiert werden, dass der von ihm gesuchte Gegenstand an seinem Aufenthaltsort nicht einsetzbar ist beziehungsweise voraussichtlich nicht die optimale Leistung bringen wird.

Gemäß einer Ausgestaltung der Erfindung kann vorgesehen sein, dass in einer ersten Datenbank Daten, insbesondere Bilddaten, zu einer Menge von Gegenständen vorgehalten werden, dass in einer zweiten Datenbank Daten, insbesondere zugehörige charakteristische Daten wie Abmessungen, Formen, Farben, zu einer Menge von Referenzobjekten vorgehalten wird und dass
- in einem ersten Schritt wenigstens ein elektronisches Abbild des Gegenstandes gemeinsam mit einem Referenzobjekt aus der zweiten Datenbank erstellt wird,
- in einem zweiten Schritt das Abbild an eine Auswerteeinheit übermittelt wird,
- in einem dritten Schritt die Auswerteeinheit das Referenzobjekt auf dem Abbild automatisch identifiziert,
- in einem vierten Schritt die Auswerteeinheit aus den in der zweiten Datenbank hinterlegten charakteristischen Daten des identifizierten Referenzobjektes und dem übermittelten, elektronischen Abbild charakteristische Daten des abgebildeten Gegenstandes ableitet,
- in einem fünften Schritt die Auswerteeinheit anhand der abgeleiteten charakteristischen Daten des abgebildeten Gegenstandes diesen in der ersten Datenbank identifiziert und
- in einem sechsten Schritt die Auswerteeinheit eine Identifikationsinformation des identifizierten Gegenstands ausgibt.
Das Verfahren sieht hierzu vor, dass dem Kunden bei Erstellung des elektronischen Abbilds eine Liste von möglichen, vorzugsweise allgemein und üblicherweise verfügbaren Referenzobjekten bekannt ist, aus der er wenigstens ein Referenzobjekt auswählt, welches er zusammen mit dem gesuchten Objekt, also dem Ersatzteil, aufnimmt. Hierdurch ist eine für die automatisierte Bilderkennung verwendbare Information unverlierbar mit der Bildanfrage verknüpft. Durch die Auswahl des Referenzobjektes kann der Kunden auch eine Vorauswahl der relevanten Teilmenge erleichtern, beispielsweise indem er für Autoersatzteile ein anderes Referenzobjekt wählt als für Motorradersatzteile.

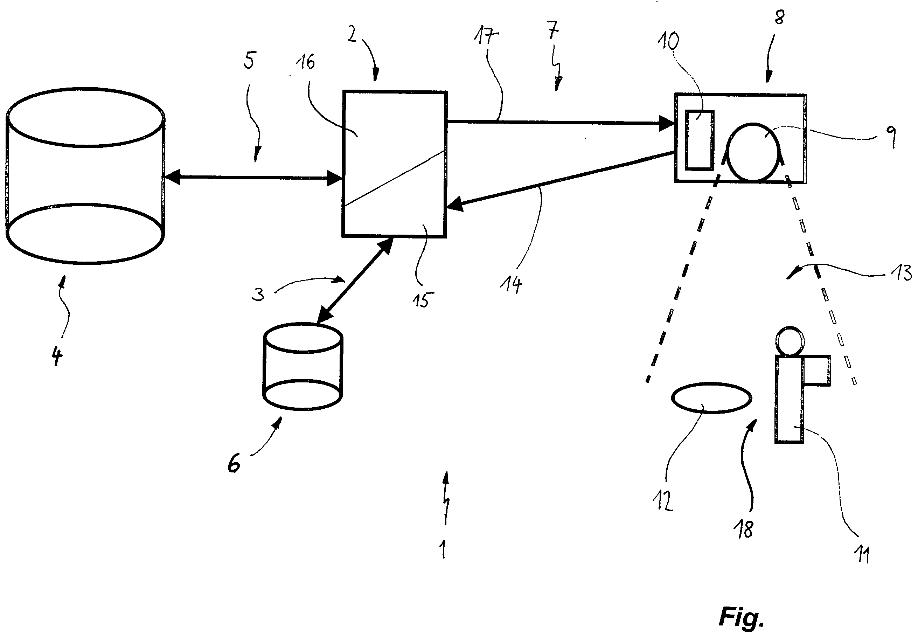

Das erfindungsgemäße Verfahren kann vorsehen, dass die Referenzobjekte anhand einer jeweils auf die Oberfläche aufgebrachten Kennzeichnung identifizierbar sind und dass die charakteristischen Daten jedes Referenzobjektes wenigstens ein Längenmaß umfassen. Eine solche Kennzeichnung ist beispielsweise als Umrissform oder als auf die Oberfläche der Referenzobjekte aufgebrachte Kennzeichnung, vorzugsweise eine Beschriftung und/oder ein Muster, ausführbar. Durch die beschriebene Verwendung von wenigstens zwei unabhängigen Merkmalen ist das Referenzobjekt besonders vorteilhaft als Bezugspunkt verwendbar. Zunächst erfolgt eine Identifizierung des Referenzobjektes anhand von Merkmalen, die nicht von der Skalierung des Bildes und dem Aufnahmeblickwinkel und dergleichen verzerrenden oder verfälschenden Einflüssen abhängen, sodann wird durch die Identifizierung gewonnene Information, die insbesondere eine charakteristische Größe des Referenzobjektes betrifft, zur Identifizierung der Skalierung und/oder der perspektivischen Verzerrung bei der Aufnahme des elektronischen Abbilds bereitgestellt wird. Mit dieser Information ist die Abbildung des gesuchten Objekts, also des Ersatzteils, auf eine Standardgröße und in eine Standardform durch computerimplementierte Bearbeitung des elektronischen Abbilds durchführbar, was die Bilderkennung, die Datenbanksuche und den Bildabgleich vereinfacht.

Ein besonders einfach handhabbares Verfahren ergibt sich, wenn die Referenzobjekte Münzen sind, wenn die Kennzeichnung eine Aufprägung ist, und wenn das wenigstens eine Längenmaß ein Durchmesser der jeweiligen Münze ist. Der Kunde kann somit ein ihm ohnehin verfügbares Referenzobjekt verwenden, wobei sich herausgestellt hat, dass die Aufprägung einer Münze eine besonders einfache Identifizierung des Referenzobjektes ermöglicht. Die Verwendung des Durchmessers der Münze als charakteristische Größe ist besonders günstig, da eine perspektivisch verzerrte Kreisform besonders einfach elektronisch entzerrbar ist, beispielsweise durch Streckung/Stauchung entlang einer Halbachse der Ellipse, die der kreisrunden Kontur der Münzen in der Abbildung entspricht. Vorzugsweise berücksichtigt die Auswerteeinheit die natürliche Farbe der erkannten Münze, um den Farbwert des elektronischen Abbilds zu korrigieren und so für die Identifizierung des gesuchten Objektes zusätzliche Information bereitzustellen.

Alternativ kann vorgesehen sein, dass die Referenzobjekte Kreditkarten oder andere Karten für den elektronischen Zahlungsverkehr sind, dass die Kennzeichnung die Kartennummer ist und dass das wenigstens eine Längenmaß eine Kantenlänge der betreffenden Karte ist. Auch hier ergeben sich die beschriebenen Vorteile der allgemeinen Verfügbarkeit und der einfachen Geometrie. Weitere Gruppen von Referenzobjekten sind vorteilhaft einsetzbar. Beispielsweise können die Referenzobjekte Aufkleber mit aufgedruckter Referenzskala und/oder Referenzfarbe sein. Derartige Referenzobjekte können beispielsweise an einer Vertriebsstelle des Herstellers oder Zwischenhändlers beziehbar sein und vom Kunden an den Ort des Ersatzteils, beispielsweise wenn ein Transport nur unter Mühen möglich ist, gebracht werden.

Eine Ausgestaltung der Erfindung kann vorsehen, dass im dritten Schritt das elektronische Abbild derart elektronisch verzerrt wird, dass das identifizierte Referenzobjekt im elektronischen Abbild mit der in der zweiten Datenbank hinterlegten Form des Referenzobjektes übereinstimmt und anschließend aus dem verzerrten elektronischen Abbild wenigstens ein Längenmaß des abgebildeten Gegenstandes ermittelt wird.

Eine besonders treffsichere Suchanfrage an die betreffenden Datenbanken ist formulierbar, wenn im dritten Schritt mit einer automatischen Mustererkennung der Symmetrietyp und wenigstens eine charakteristische Größe eines an dem abgebildeten Gegenstand vorhandenen Musters ermittelt wird. Ein solches Muster kann beispielsweise auf der Oberfläche und/oder in einem Material, insbesondere als Durchbrechung des Materials, ausgebildet sein.

Besonders günstig ist es, wenn die automatische Mustererkennung im dritten Schritt wenigstens eine zweidimensionale Fourier-Transformation des elektronischen Abbilds ausführt. Durch die Bestimmung der Extremwerte sind Symmetrieachsen und/oder Gitterabstände der Elementarzellen des Musters besonders leicht automatisiert erkennbar.

Vorzugsweise ist die bei der Mustererkennung im dritten Schritt ermittelte charakteristische Größe eine Gitterkonstante und/oder ein Gitterwinkel. Die Suchanfrage oder Vorauswahl der in Frage kommenden Abbildungen von Gegenständen ist somit auf solche Objekte beschränkbar, welche die betreffende charakteristische Größe aufweisen.

Die Erfindung ist vorteilhaft einsetzbar allgemein bei Waren eines Sortiments mit einer schwer überschaubaren Vielzahl von Einzelausprägungen, insbesondere wenn diese Einzelausprägungen aus Teilen eines Baukastens oder Systems zusammengesetzt sind und beim Zusammenbau eine Vielzahl von Regeln und Abhängigkeiten zu beachten ist, wenn also die Einzelteile in der Regel nicht universell passen. Beispiele stellen Staubsaugerbeutel, Ersatzleuchtmittel für Lampen, Ersatzteile für Autos, Motorräder, Fahrräder, besonders Oldtimer und/oder Liebhaberstücke, Bremsbeläge, Zündkerzen, Scheibenwischer, Stecksysteme, Möbelstücke und dergleichen dar.

Die Erfindung ist vorteilhaft einsetzbar, wenn die Gegenstände Strahlregler sind und wenn die wenigstens eine charakteristische Länge der Durchmesser des Strahlreglers und/oder die Länge des Strahlreglers ist. Von Vorteil ist dabei, dass die in der Farbe, in der ein Muster bildenden Geometrie des Siebes, in den Einbaumaßen enthaltene Information vom Benutzer des Verfahrens unbemerkt dem elektronischen Abbild entnehmbar ist, ohne dass der Kunde überhaupt wissen muss, dass beispielsweise für verschiedene Wasserhärten, für verschiedene Leitungsdrücke und dergleichen unterschiedliche Strahlregler eingesetzt werden müssen.

Vorzugsweise ist das am abgebildeten Gegenstand vorhandene Muster durch das Gitter eines Siebeinsatzes beschrieben.

Bei einer Ausgestaltung der Erfindung kann vorgesehen sein, dass die Auswerteeinheit, beispielsweise in einem dritten oder weiteren Schritt, die Farbe des abgebildeten Gegenstandes ermittelt, indem sie die Farbe des abgebildeten Referenzobjektes mit der in der zweiten Datenbank hinterlegten Farbe des Referenzobjektes vergleicht. Dies ermöglicht vorteilhaft die Auswahl eines auch farblich passenden Ersatzteils, wenn mehrere Alternativen verfügbar sind, oder auch die Berücksichtigung der in der Farbe kodierten Zusatzinformation. Beispielsweise ist es bei Strahlreglern bekannt, die festgelegte Durchflussmenge und/oder den bewirkten Druckabfall im Strahlregler durch Farbwahl kenntlich zu machen. Da diese Werte von den Gegebenheiten am Einsatzort, beispielsweise dem örtlichen Wasserleitungsdruck, abhängen, ist durch Berücksichtigung dieser Information eine fehlerhafte Ersatzteilwahl seitens des Kaufinteressenten durch die Erfindung vermeidbar.

Eine besonders einfache Durchführbarkeit des Verfahrens ergibt sich, wenn das Abbild des zu identifizierenden Gegenstandes - beispielsweise im MMS-Format und/oder mit einem Mobiltelefon mit Kamerafunktion - aufgenommen und - beispielsweise über ein Mobilfunknetz - an die Auswerteeinheit übermittelt wird und wenn die Identifikationsinformation oder eine Aufforderung zur Aufnahme eines weiteren Abbilds vorzugsweise aus einem anderen Blickwinkel, vorzugsweise verbunden mit einer Referenzidentifikation, an den Absender, beispielsweise das Mobiltelefon, gesendet wird. Somit ist für die Erstellung des elektronischen Abbilds durch die Wahl des Datenformats und/oder des Aufnahmemittels ein Mittel verwendbar, über das heutzutage im Wesentlichen jeder potentielle Kunde verfügt, und es ist dasselbe Mittel zum Absenden der Abfrage und zum Empfang des Ergebnisses einsetzbar. Das Verfahren ist somit derart ausgestaltet, dass es auf einer universell verfügbaren Vorrichtung ausführbar ist, bei der ein im privaten Verfügungsbereich des Kunden stehendes Gerät, das Mobilfunkgerät, einen Teil bildet, und bei der ein öffentliches Kommunikationssystem, das Internet oder ein Mobilfunknetz, einen weiteren Teil bildet, wobei zur Ausführung des Verfahrens die beschriebenen Teile mit weiteren Teilen, beispielsweise der Auswerteeinheit, zusammenwirken.

Statt MMS-Format sind auch weitere Bildformate wie jpeg, tiff, pdf, png und dergleichen vorteilhaft einsetzbar.

Vorzugsweise enthält das übersendete Abbild Informationen über das Aufnahmemittel, beispielsweise Auflösung, Vergrößerung, Belichtungsdaten und dergleichen oder es sind derartige Information mit dem Abbild verknüpft.

Eine erhöhte Zuordnungswahrscheinlichkeit ergibt sich, wenn in der Datenbank zu jedem Objekt Ansichten aus mehren Blickwinkeln vorgehalten werden.

Eine Ausgestaltung der Erfindung kann vorsehen, dass nicht alle ermittelten Gegenstände ausgegeben werden, sondern dass die Suchabfrage und somit die Identifikation mit weiteren Nebenbedingungen versehen ist, die beispielsweise eine Beschränkung auf bestimmte, auch höherwertige als das abgebildete Ersatzteil, Produktlinien bewirken.

Eine Ausgestaltung der Erfindung kann vorsehen, dass bei erfolgloser Recherche in den verfügbaren Datenbanken und/oder bei erfolglosem Identifizierungsversuch des Referenzobjektes und/oder bei weiteren, ergebnishindernden Gegebenheiten eine Rückfrage und/oder eine Aufforderung, ein weiteres Abbild, vorzugsweise aus anderer Entfernung und/oder mit anderem Referenzobjekt und/oder aus anderem Blickwinkel an den Ersteller des Abbildes abzusenden und/oder einen Fachmann einzuschalten, der die Anfrage manuell bearbeitet.

Eine Ausgestaltung der Erfindung kann vorsehen, dass das Abbild des zu identifizierenden Gegenstandes mit einem vorzugsweise in einer Verkaufseinrichtung fest installierten Gerät mit Kamerafunktion aufgenommen wird, dass das Abbild über Internet oder ein Mobilfunknetz an die Auswerteeinheit übermittelt wird und dass die Identifikationsinformation an das Gerät mit Kamerafunktion über Internet oder eine Mobilfunknetz übermittelt und an dem Gerät mit Kamerafunktion angezeigt oder ausgegeben wird. Ein solches Gerät ist vorteilhaft an einem Verkaufsort installierbar, und ein Kaufinteressent muss lediglich sein Ersatzteil an der vorgesehenen Stelle platzieren und erhält nahezu im selben Augenblick die gewünschte Information zu dem eingelegten Teil und/oder Hinweise auf ein funktional besseres und/oder preislich günstigeres und/oder umweltfreundlicheres Ersatzmittel und/oder zusätzliche Installations- oder Pflegetipps.

Die Erfindung betrifft weiter ein Verfahren zum Auswählen eines Ersatzteils für ein übergeordnetes Objekt oder für ein Produktsystem, bei dem wenigstens ein Bild eines zu ersetzenden Originalteils und/oder eines übergeordneten Objekts übermittelt wird, das Originalteil und/oder das Objekt anhand des Bildes identifiziert wird, wenigstens ein Ersatzteil dem identifizierten Originalteil und/oder Objekt zugeordnet wird und eine Liste passender Ersatzteile ausgegeben wird. Die Ausgabe kann durch Ausdruck, Ansage und/oder Anzeige und/oder Aushändigung des in einem Vorratsbehälter vorgehaltenen, passenden Originalteils oder auf andere Weise erfolgen.

Die Erfindung sieht weiter zur Lösung der Aufgabe vor, bei einer Vorrichtung zur Identifikation eines Gegenstandes eine Aufnahmeeinheit zu schaffen, die zur Aufnahme eines gesuchten Gegenstandes ausgebildet ist, wobei die Vorrichtung eine Kamera zur Erstellung eines elektronischen Abbilds eines in die Aufnahmeeinheit eingelegten Gegenstandes, Kommunikationsmittel zur Übermittlung des elektronischen Abbilds an eine Auswerteeinheit und Kommunikationsmittel zum Empfang einer durch die Auswerteeinheit ermittelten Identifikationsinformation zu dem elektronischen Abbild hat. Die Aufnahme kann beispielsweise als Ablage oder als Halterung ausgebildet sein. Die Kamera kann beispielsweise als handelsübliche Kamera oder als in die Vorrichtung integrierte Kamera mit oder ohne Fokussierfunktion ausgebildet sein. Vorzugsweise sind an der Aufnahmeeinheit Markierungen aufgebracht oder spezielle Formgebungen ausgestaltet, die auf einem durch die Kamera erstellten elektronischen Abbild, also beispielsweise einem digitalen Foto des Gegenstandes gemeinsam mit diesem erkennbar sind und Informationen über Größenverhältnisse und/oder Farbwerte und/oder Aufstellungsort der Vorrichtung und/oder Zeitpunkt der Erstellung des elektronischen Abbilds wiedergeben. Die Kommunikationsmittel umfassen beispielsweise die notwendigen Mittel zur Durchführung einer Datenübertragung, insbesondere des elektronischen Abbilds, über ein Datenübertragungsnetz, beispielsweise ein Mobilfunknetz oder das Internet oder eine Telefonleitung, also insbesondere Verarbeitungsmittel und Sendemittel beziehungsweise Empfangsmittel, beispielsweise Mobilfunksende- und empfangseinheit und/oder Netzwerkkarte und Internetanschluss und/oder Telefon- bzw. Faxanschluss. Vorzugsweise ist die Vorrichtung an einem festen Ort, beispielsweise in einer Verkaufseinrichtung, einem Supermarkt, einem Baumarkt oder dergleichen, installiert.

Bei einer Ausgestaltung der erfindungsgemäßen Vorrichtung kann vorgesehen sein, dass Ausgabemittel zur Ausgabe der empfangenen Identifikationsinformation vorgesehen sind. Diese Ausgabemittel können als Anzeigemittel, beispielsweise Display, als Mittel zur Ausgabe eines Ausdrucks, beispielsweise Drucker, und/oder als Mittel zur Sprachausgabe ausgebildet sein. Von Vorteil ist dabei, dass ein Kunde einen Gegenstand, beispielsweise ein defektes Teil, welches er durch ein neues, gleichartiges Teil ersetzen möchte, in die Aufnahmeeinheit der Vorrichtung einlegen kann und innerhalb kurzer Zeit, im Wesentlichen unmittelbar oder ohne Verzögerung, eine Antwort der Vorrichtung erhält, die eine Information zu dem eingelegten Gegenstand liefert.

Bei einer Ausgestaltung der erfindungsgemäßen Vorrichtung kann vorgesehen sein, dass eine Vorratseinheit vorhanden ist, in der Gegenstände bereitgehalten sind, und dass Mittel zur Auswahl eines Gegenstands aus der Vorratseinheit und Mittel zur Ausgabe des Gegenstandes ausgebildet sind. Die Vorratseinheit ist als vorzugsweise automatisch bestückbares Lager ausgebildet, und die Mittel zur Auswahl eines Gegenstandes sind durch die automatischen Bestückungsanlage des Lagers gegeben. Diese automatische Bestückungsanlage ist vorzugsweise so ausgebildet, dass ein vorgegebener Gegenstand in dem Lager auswählbar und durch eine Ausgabeluke oder dergleichen ausgebbar ist. Der Kunde erhält somit unmittelbar seinen gesuchten Gegenstand.

Vorzugsweise wird die erfindungsgemäße Vorrichtung mit dem erfindungsgemäßen Verfahren betrieben.

Die Erfindung wird anhand des in der einzigen Figur gezeigten Ausführungsbeispiels näher beschrieben.

Eine im ganzen mit 1 bezeichnete Identifizierungsvorrichtung hat eine Auswerteeinheit 2, die über das Internet 5 an eine erste Datenbank 4 und über eine Kommunikationsleitung 3 an eine zweite Datenbank 6 angeschlossen ist.

Die erste Datenbank 4 enthält Abbildungen zu einer Menge von weiteren Objekten, zu denen Identifizierungsabfragen formulierbar sind.

Die zweite Datenbank 6 enthält Abbildungen zu einer Menge von Referenzobjekten und zusätzliche, charakteristische Informationen zu jedem hinterlegten Referenzobjekt.

Im hier dargestellten Ausführungsbeispiel ist die Auswerteeinheit 2 weiterhin über ein Mobilfunknetz 7 mit einer Mobilfunkkamera 8 zum Datenaustausch verbunden. Der Datenaustausch kann aber auch über jede drahtgebundene oder drahtlose Datenfernübertragung oder - praktisch als elektronischer Experte - direkt vor Ort erfolgen.

Die Mobilfunkkamera 8 verfügt über ein Objektiv 9 zur Bildaufnahme und ein Display 10.

Zu Identifizierung eines gesuchten Objektes 11 wird dieses gemeinsam mit einem Referenzobjekt 12, zu dem wenigstens ein Abbild in der zweiten Datenbank 6 hinterlegt ist, fotografisch 13 aufgenommen.

Das in der Mobilfunkkamera 8 so erstellte elektronische Abbild wird nun als Suchanfrage 14 über das Mobilfunknetz 7 an die Auswerteeinheit 2 übermittelt.

Die Auswerteeinheit 2, die auch durch eine Person gebildet sein kann, aber hier vorzugsweise als Datenverarbeitungsanlage ausgebildet ist, identifiziert zunächst mit einem Bilderkennungsalgorithmus 15 das Referenzobjekt 12 und verarbeitet das elektronische Abbild, bis das abgebildete Referenzobjekt 12 eine festgelegte Standardform und Standardgröße aufweist. Hierbei wird das Abbild des gesuchten Gegenstands zwangsläufig mitverändert.

In einer Abgleicheinheit 16 wird nun eine Suchanfrage für die erste Datenbank 4 formuliert und über das Internet 5 abgesendet. Das Ergebnis dieser Suchanfrage wird über das Internet 5 empfangen und in aufbereiteter Form an die Mobilfunkkamera 8 über das Mobilfunknetz 7 als Rückmeldung 17 weitergegeben und dort auf dem Anzeigemittel 10 angezeigt.

Sind die Referenzdatenbank 6 und zusätzlich oder stattdessen insbesondere die Bilddatenbank 4 in einem festgelegten Datenformat angelegt, kann das hier dargestellte System auch verschiedenen, ggf. auch konkurrierenden Herstellern oder Anbietern offenstehen, um diesen beispielsweise die Ersatzteil- oder Zubehörversorgung gegenüber den Kunden zu erleichtern beziehungsweise zu automatisieren. Dabei ist die Unterscheidung zwischen den Datenbanken 4 und 6 nicht physisch gemeint, sondern lediglich auf die Zuordnung und Zweckbestimmung der gegebenenfalls auf einem Datenträger abgespeicherten Bild- und Referenzdaten bezogen. Das hier beschriebene System kann einem in der Bilddatenbank abgespeicherten Produkt auch solche Ersatz- oder Zubehörteile neuerer Produktion zuordnen, die zum Austausch für nicht mehr verfügbare Ersatz- oder Zubehörteile bestimmt sind.

## Patentansprüche

1. Vorrichtung zur Identifikation eines Gegenstandes, wobei eine Aufnahmeeinheit (18) vorhanden ist, zur Aufnahme eines gesuchten Gegenstandes (11), wobei eine Kamera (8) vorgesehen ist zur Erstellung (13) eines elektronischen Abbilds eines in die Aufnahmeeinheit (18) eingelegten Gegenstandes gemeinsam mit einem Referenzobjekt (12), wobei Kommunikationsmittel (8) zur Übermittlung (14) des elektronischen Abbilds an eine Auswerteeinheit (2) vorgesehen sind, wobei Kommunikationsmittel zum Empfang einer durch die Auswerteeinheit ermittelten Identifikationsinformation (17) zu dem elektronischen Abbild vorgesehen sind, wobei eine Varratseinheit vorhanden ist, in der Gegenstände bereitgehalten sind, wobei Mittel zur Auswahl eines Gegenstands aus der Vorratseinheit und Mittel zur Ausgabe des gesuchten Gegenstandes ausgebildet sind, wobei ein Verfahren zur Identifizierung des Gegenstandes (11) ausführbar ist, wobei in einem ersten Verfahrensschritt (13) das wenigstens eine elektronische Abbild des zu identifizierenden Gegenstandes (11) an die Auswerteeinheit (2) übermittelt wird, wobei das elektronische Abbild in der Auswerteeinheit (2) auf Übereinstimmungen mit zumindest einem, in einer Datenbank (4) hinterlegten elektronischen Abbild des zu identifizierenden Gegenstandes (11) oder mindestens eines formidentischen oder formähnlichen Gegenstandes abgeglichen wird und wobei die Auswerteeinheit (2) anschließend die Daten ausgibt (17), die in der Datenbank (4) zu dem zumindest einen, als ausreichend übereinstimmend erkannten Abbild hinterlegt waren, wobei in der Auswerteeinheit (2) eine Vorauswahl aufgrund von im übermittelten Abbild zusätzlich abgebildeten und als Referenzobjekte (12) dienenden Münzen oder Gliedermaßstäbe getroffen wird, wobei die als Referenzobjekte (12) dienenden Münzen oder Gliedermaßstäbe anhand einer jeweils auf ihre Oberfläche aufgebrachten und als Beschriftung und/oder Muster ausgebildeten Aufprägung identifizierbar sind, wobei die charakteristischen Daten jeder als Referenzobjekt (12) dienenden Münze wenigstens ein als Durchmesser der jeweiligen Münze gespeichertes Längenmaß oder jedes als Referenzobjekt (12) dienenden Gliedermaßstabs wenigstens ein gespeichertes Längenmaß umfassen, wobei die Auswerteeinheit (2) die als Referenzobjekt (12) dienende Münze oder den als Referenzobjekt (12) dienenden Gliedermaßstab auf dem Abbild automatisch identifiziert und aus den in einer zweiten. Datenbank (6) hinterlegten charakteristischen Daten dieses identifizierten Referenzobjektes (12) und dem übermittelten, elektronischen Abbild charakteristische Daten des abgebildeten Gegenstandes (11) ableitet und anschließend anhand der abgeleiteten charakteristischen Daten des abgebildeten Gegenstandes (11) diesen in der ersten Datenbank (4) identifiziert.

2. Vorrichtung nach Anspruch 1, **dadurch gekennzeichnet, dass** Ausgabemittel (10) zur Ausgabe der empfangenen Identifikationsinformation (17) vorgesehen sind.

3. Vorrichtung nach Anspruch 1, **dadurch gekennzeichnet, dass** bei dem Verfahren zur Identifizierung eines Gegenstandes (11) die von der Auswerteeinheit (2) ausgegebenen Daten (17) sich auf den zu identifizierenden Gegenstand (11) oder ein dem zu identifizierenden Gegenstand (11) zugeordnetes Ersatzteil oder Bestandteil beziehen.

4. Vorrichtung nach Anspruch 1 oder 3, **dadurch gekennzeichnet, dass** bei dem Verfahren zur Identifizierung eines Gegenstandes (11) die zum Abgleich bestimmte Datenmenge und/oder die ausgegebenen Daten (17) durch eine Vorauswahl auf eine Teilmenge der in der Datenbank (4) hinterlegten Abbilder oder der zu dem hinterlegten Abbild zugehörigen Daten begrenzt wird/werden.

5. Vorrichtung nach einem der Ansprüche 1 oder 3 oder 4, **dadurch gekennzeichnet, dass** bei dem Verfahren zur Identifizierung eines Gegenstandes (11) im dritten Schritt (16) das elektronische Abbild derart elektronisch verzerrt wird, dass das identifizierte Referenzobjekt (12) im elektronischen Abbild mit der in der zweiten Datenbank (6) hinterlegten Form des Referenzobjektes (12) übereinstimmt und anschließend aus dem verzerrten elektronischen Abbild wenigstens ein Längenmaß des abgebildeten Gegenstandes ermittelt wird.

6. Vorrichtung nach einem der Ansprüche 1, 3 bis 5, **dadurch gekennzeichnet, dass** bei dem Verfahren zur Identifizierung eines Gegenstandes (11) im dritten Schritt mit einer automatischen Mustererkennung (15) der Symmetrietyp und wenigstens eine charakteristische Größe eines an dem abgebildeten Gegenstand vorhandenen Musters ermittelt wird.

7. Vorrichtung nach einem der Ansprüche 1, 3 bis 6, **dadurch gekennzeichnet, dass** bei dem Verfahren zur Identifizierung eines Gegenstandes (11) die automatische Mustererkennung (15) im dritten Schritt wenigstens eine zweidimensionale Fourier-Transformation des elektronischen Abbilds ausführt.

8. Vorrichtung nach einem der Ansprüche 1, 3 bis 7, **dadurch gekennzeichnet, dass** bei dem Verfahren zur Identifizierung eines Gegenstandes (11) die bei der Mustererkennung (15) im dritten Schritt ermittelte charakteristische Größe eine Gitterkonstante und/oder ein Gitterwinkel ist.

9. Vorrichtung nach einem der Ansprüche 1, 3 bis 8, **dadurch gekennzeichnet, dass** bei dem Verfahren zur Identifizierung eines Gegenstandes (11) die Gegenstände (11) Strahlregler sind und dass die wenigstens eine charakteristische Länge der Durchmesser des Strahlreglers und/oder die Länge des Strahlreglers ist.

10. Vorrichtung nach einem der Ansprüche 1, 3 bis 9, **dadurch gekennzeichnet, dass** bei dem Verfahren zur Identifizierung eines Gegenstandes (11) das am abgebildeten Gegenstand vorhandene Muster durch die Zulauf- und/oder Auslaufstruktur eines sanitären Einsetzteiles und insbesondere eines Strahlregler beschrieben wird.

11. Vorrichtung nach einem der Ansprüche 1, 3 bis 10, **dadurch gekennzeichnet, dass** bei dem Verfahren zur Identifizierung eines Gegenstandes (11) das am abgebildeten Gegenstand vorhandene Muster durch eine Seitenansicht des sanitären Einsetzteiles und insbesondere des Strahlreglers beschrieben wird.

12. Vorrichtung nach einem der Ansprüche 1, 3 bis 11, **dadurch gekennzeichnet, dass** bei dem Verfahren zur Identifizierung eines Gegenstandes (11) im dritten Schritt die Auswerteeinheit (2) die Farbe des abgebildeten Gegenstandes ermittelt, indem sie die Farbe des abgebildeten Referenzobjektes (12) mit der in der zweiten Datenbank (6) hinterlegten Farbe des Referenzobjektes (12) vergleicht.

13. Vorrichtung nach einem der Ansprüche 1, 3 bis 12, **dadurch gekennzeichnet, dass** bei dem Verfahren zur Identifizierung eines Gegenstandes (11) das Abbild des zu identifizierenden Gegenstandes (11) im MMS-Format, vorzugsweise mit einem Mobiltelefon (8) mit Kamerafunktion (9), aufgenommen und über ein Mobilfunknetz an die Auswerteeinheit (2) übermittelt wird und dass die Identifikationsinformation (17) oder eine Aufforderung zur Aufnahme eines weiteren Abbilds vorzugsweise aus einem anderen Blickwinkel, vorzugsweise verbunden mit einer Referenzidentifikation, an den Absender, vorzugsweise das Mobiltelefon (8), gesendet wird.

14. Vorrichtung nach einem der Ansprüche 1, 3 bis 13, **dadurch gekennzeichnet, dass** bei dem Verfahren zur Identifizierung eines Gegenstandes (11) das Abbild des zu identifizierenden Gegenstandes (11) mit einem vorzugsweise in einer Verkaufseinrichtung fest installierten Gerät (8) mit Kamerafunktion (9) aufgenommen wird, dass das Abbild an die Auswerteeinheit (2) übermittelt wird (14) und dass die Identifikationsinformation an das Gerät mit Kamerafunktion übermittelt (17) und an dem Gerät mit Kamerafunktion (8, 10) angezeigt oder ausgegeben wird.

## Claims

1. Apparatus for identifying an object, wherein a receiving unit (18) is present for receiving a searched object (11), wherein a camera (8) is provided for generating (13) an electronic image of an object inserted into the receiving unit (18), together with a reference object (12), wherein communications means (8) are provided for transmitting (14) the electronic image to an evaluation unit (2), wherein communications means are provided for receiving identification information (17) determined by the evaluation unit concerning the electronic image, wherein a storage unit is present, in which objects are stored, wherein means are configured for selecting an object from the storage unit and means are configured for outputting the searched object, wherein a method for identifying the object (11) can be carried out, wherein in a first method step (13) the at least one electronic image of the object (11) to be identified is transmitted to the evaluation unit (2), wherein the electronic image in the evaluation unit (2) is compared in respect of matches with at least one electronic image, which is stored in a database (4), of the object (11) to be identified or of at least one object which is identical in shape or similar in shape, and wherein the evaluation unit (2) subsequently outputs (17) the data which were stored in the database (4) with respect to the at least one image recognised as being a sufficient match, wherein in the evaluation unit (2) a pre-selection is made on the basis of coins or folding rulers which are additionally imaged in the transmitted image and serve as reference objects (12), wherein the coins or folding rulers serving as reference objects (12) can be identified with the aid of an impression which in each case is applied to the surface thereof and is formed as lettering and/or a pattern, wherein the characteristic data of each coin serving as a reference object (12) comprise at least one length measurement stored as a diameter of the respective coin or the characteristic data of each folding ruler serving as a reference object (12) comprise at least one stored length measurement, wherein the evaluation unit (2) automatically identifies on the image the coin serving as a reference object (12) or the folding ruler serving as a reference object (12) and derives characteristic data of the imaged object (11) from the characteristic data, which are stored in a second database (6), of this identified reference object (12) and from the transmitted electronic image, and subsequently identifies the imaged object (11) in the first database with the aid of the derived characteristic data of this object.

2. Apparatus as claimed in claim 1, **characterised in that** outputting means (10) are provided for outputting the received identification information (17).

3. Apparatus as claimed in claim 1, **characterised in that** in the method for identifying an object (11) the data (17) output by the evaluation unit (2) relate to the object (11) to be identified or to a replacement part or component allocated to the object (11) to be identified.

4. Apparatus as claimed in claim 1 or 3, **characterised in that** in the method for identifying an object (11) the amount of data intended for comparison purposes and/or the output data (17) is/are limited by a pre-selection to a subset of the images stored in the database (4) or the data associated with the stored image.

5. Apparatus as claimed in any one of claims 1 or 3 or 4, **characterised in that** in the method for identifying an object (11), in the third step (16) the electronic image is electronically distorted such that the identified reference object (12) in the electronic image matches the shape of the reference object (12) stored in the second database (6) and subsequently at least one length measurement of the imaged object is determined from the distorted electronic image.

6. Apparatus as claimed in any one of claims 1, 3 to 5, **characterised in that** in the method for identifying an object (11), in the third step the type of symmetry and at least one characteristic variable of a pattern present on the imaged object is determined by means of automatic pattern recognition (15).

7. Apparatus as claimed in any one of claims 1, 3 to 6, **characterised in that** in the method for identifying an object (11) the automatic pattern recognition (15) carries out in the third step at least one two-dimensional Fourier transformation of the electronic image.

8. Apparatus as claimed in any one of claims 1, 3 to 7, **characterised in that** in the method for identifying an object (11) the characteristic variable determined during the pattern recognition (15) in the third step is a lattice constant and/or a lattice angle.

9. Apparatus as claimed in any one of claims 1, 3 to 8, **characterised in that** in the method for identifying an object (11) the objects (11) are jet regulators and **in that** the at least one characteristic length is the diameter of the jet regulator and/or the length of the jet regulator.

10. Apparatus as claimed in any one of claims 1, 3 to 9, **characterised in that** in the method for identifying an object (11) the pattern present on the imaged object is described by the inlet and/or outlet structure of a sanitary insert part and in particular a jet regulator.

11. Apparatus as claimed in any one of claims 1, 3 to 10, **characterised in that** in the method for identifying an object (11) the pattern present on the imaged object is described by a side view of the sanitary insert part and in particular the jet regulator.

12. Apparatus as claimed in any one of claims 1, 3 to 11, **characterised in that** in the method for identifying an object (11), in the third step the evaluation unit (2) determines the colour of the imaged object, **in that** it compares the colour of the imaged reference object (12) to the colour of the reference object (12) stored in the second database (6).

13. Apparatus as claimed in any one of claims 1, 3 to 12, **characterised in that** in the method for identifying an object (11) the image of the object (11) to be identified is recorded in MMS format, preferably with a mobile telephone (8) having a camera function (9) and is transmitted via a mobile communications network to the evaluation unit (2) and **in that** the identification information (17) or a request for recording a further image preferably from another angle of view, preferably associated with a reference identification, is sent to the sender, preferably the mobile telephone (8).

14. Apparatus as claimed in any one of claims 1, 3 to 13, **characterised in that** in the method for identifying an object (11) the image of the object (11) to be identified is recorded with a device (8) which is fixedly installed preferably in a sales facility and has a camera function (9), **in that** the image is transmitted (14) to the evaluation unit (2) and **in that** the identification information is transmitted (17) to the device having the camera function and is displayed or output on the device having the camera function (8, 10).

## Revendications

1. Dispositif pour l'identification d'un objet, dans lequel il se trouve une unité de logement (18), destinée à contenir un objet recherché (11), dans lequel il est prévu une caméra (8) pour la formation (13) d'une image électronique d'un objet déposé dans l'unité de logement (18) en compagnie d'un objet de référence (12), dans lequel il est prévu des moyens de communication (8) pour la transmission (14) de l'image électronique à une unité d'exploitation (2), dans lequel il est prévu des moyens de communication pour la réception d'une information d'identification (17) relative à l'image électronique déterminée par l'unité d'exploitation (2), dans lequel il se trouve une unité de stockage, dans laquelle des objets sont préparés, dans lequel sont formés des moyens pour la sélection d'un objet à partir de l'unité de stockage et des moyens pour la sortie de l'objet recherché, dans lequel un procédé pour l'identification de l'objet (11) peut être exécuté, dans lequel, au cours d'une première étape du procédé (13), on transmet ladite au moins une image électronique de l'objet à identifier (11) à l'unité d'exploitation (2), dans lequel on compare l'image électronique dans l'unité d'exploitation (2) au niveau de concordances avec au moins une image électronique de l'objet à identifier (11) ou d'au moins un objet de forme identique ou de forme similaire déposée dans une banque de données (4) et dans lequel l'unité d'exploitation (2) émet ensuite (17) les données déposées dans la banque de données (4) relatives à ladite au moins une image reconnue comme suffisamment concordante, dans lequel on effectue dans l'unité d'exploitation (2) une présélection sur la base de pièces de monnaie ou de mètres pliants servant d'objets de référence (12) et représentés en plus dans l'image transmise, dans lequel les pièces de monnaie ou les mètres pliants servant d'objets de référence (12) sont identifiables à l'aide d'une empreinte appliquée respectivement sur leur surface et réalisée sous la forme d'une inscription et/ou d'un motif, dans lequel les données caractéristiques de chaque pièce de monnaie servant d'objet de référence (12) comprennent au moins une cote de longueur mémorisée en tant que diamètre de la pièce de monnaie respective ou au moins une cote de longueur mémorisée comme mètre pliant servant d'objet de référence (12), dans lequel l'unité d'exploitation (2) identifie automatiquement sur l'image la pièce de monnaie servant d'objet de référence (12) ou le mètre pliant servant d'objet de référence (12) et déduit des données caractéristiques de cet objet de référence identifié (12) stockées dans une deuxième banque de données (6) et de l'image électronique transmise des données caractéristiques de l'objet représenté (11) et, à l'aide des données caractéristiques de l'objet représenté (11) ainsi déduites, identifie ensuite celui-ci dans la première banque de données (4).

2. Dispositif selon la revendication 1, **caractérisé en ce qu'**il est prévu des moyens d'émission (10) pour l'émission de l'information d'identification reçue (17).

3. Dispositif selon la revendication 1, **caractérisé en ce que**, dans le procédé pour l'identification d'un objet (11), les données (17) émises par l'unité d'exploitation (2) se rapportent à l'objet à identifier (11) ou à une pièce de rechange ou à un composant associé(e) à l'objet à identifier (11).

4. Dispositif selon la revendication 1 ou 3, **caractérisé en ce que**, dans le procédé pour l'identification d'un objet (11), on limite la quantité de données destinées à la comparaison et/ou les données émises (17) par une présélection à une quantité partielle des images stockées dans la banque de données (4) ou à des données appartenant à l'image stockée.

5. Dispositif selon l'une quelconque des revendications 1 ou 3 ou 4, **caractérisé en ce que**, dans le procédé pour l'identification d'un objet (11), on déforme électroniquement l'image électronique dans la troisième étape (16), de telle manière que l'objet de référence identifié (12) concorde avec la forme de l'objet de référence (12) stockée dans la deuxième banque de données (6) et on détermine ensuite au moins une cote de longueur de l'objet représenté à partir de l'image électronique déformée.

6. Dispositif selon l'une quelconque des revendications 1, 3 à 5, **caractérisé en ce que**, dans le procédé pour l'identification d'un objet (11), on détermine à la troisième étape, avec une reconnaissance automatique de motif (15), le type de symétrie et au moins une grandeur caractéristique d'un motif présent sur l'objet représenté.

7. Dispositif selon l'une quelconque des revendications 1, 3 à 6, **caractérisé en ce que**, dans le procédé pour l'identification d'un objet (11), la reconnaissance automatique d motif (15) effectue dans la troisième étape au moins une transformation de Fourier bidimensionnelle de l'image électronique.

8. Dispositif selon l'une quelconque des revendications 1, 3 à 7, **caractérisé en ce que**, dans le procédé pour l'identification d'un objet (11), la grandeur caractéristique déterminée lors de la reconnaissance de motif (15) dans la troisième étape est une constante de grille et/ou un angle de grille.

9. Dispositif selon l'une quelconque des revendications 1, 3 à 8, **caractérisé en ce que**, dans le procédé pour l'identification d'un objet (11), les objets (11) sont des aérateurs et **en ce que** ladite au moins une longueur caractéristique est le diamètre de l'aérateur et/ou la longueur de l'aérateur.

10. Dispositif selon l'une quelconque des revendications 1, 3 à 9, **caractérisé en ce que**, dans le procédé pour l'identification d'un objet (11), on décrit le motif présent sur l'objet représenté par la structure d'entrée et/ou de sortie d'une pièce d'insertion sanitaire et, en particulier, d'un aérateur.

11. Dispositif selon l'une quelconque des revendications 1, 3 à 10, **caractérisé en ce que**, dans le procédé pour l'identification d'un objet (11), on décrit le motif présent sur l'objet représenté par une vue latérale de la pièce d'insertion sanitaire et, en particulier, de l'aérateur.

12. Dispositif selon l'une quelconque des revendications 1, 3 à 11, **caractérisé en ce que**, dans le procédé pour l'identification d'un objet (11), l'unité d'exploitation (2) détermine dans la troisième étape la couleur de l'objet représenté, par le fait qu'elle compare la couleur de l'objet de référence représenté (12) avec la couleur de l'objet de référence (12) stockée dans la deuxième banque de données (6).

13. Dispositif selon l'une quelconque des revendications 1, 3 à 12, **caractérisé en ce que**, dans le procédé pour l'identification d'un objet (11), on enregistre l'image de l'objet à identifier (11) au format MMS, de préférence avec un téléphone mobile (8) avec une fonction de caméra (9), et on la transmet à l'unité d'exploitation (2) par un réseau de téléphonie mobile et **en ce que** l'on envoie à l'expéditeur, de préférence au téléphone mobile (8), l'information d'identification (17) ou une demande de prise d'une autre image de préférence sous un autre angle de visée, de préférence en liaison avec une identification de référence.

14. Dispositif selon l'une quelconque des revendications 1, 3 à 13, **caractérisé en ce que**, dans le procédé pour l'identification d'un objet (11), on enregistre l'image de l'objet à identifier (11) avec un appareil (8) avec une fonction de caméra (9) installé à poste fixe dans un point de vente, **en ce que** l'on transmet (14) l'image à l'unité d'exploitation (2) et **en ce que** l'on transmet (17) l'information d'identification à l'appareil avec la fonction de caméra et on l'affiche ou on l'émet sur l'appareil avec la fonction de caméra (8, 10).
